# EUROPÄISCHE PATENTSCHRIFT

(11) **EP 2 831 463 B1**
(45) Veröffentlichungstag und Bekanntmachung des Hinweises auf die Patenterteilung: **14.03.2018**
(21) Anmeldenummer: 13714576.9
(22) Anmeldetag: 22.03.2013
(51) Int. Cl.: F16D 65/18, F16J 3/04

(54) **SCHEIBENBREMSE**
DISC BRAKE
FREIN A DISQUE

(30) Priorität: 26.03.2012 DE 102012006114
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); IRASCHKO, Johann, 85301 Schweitenkirchen (DE); PESCHEL, Michael, 82296 Schöngeising (DE); FRICKE, Jens, 94474 Vilshofen (DE); STOEGER, Christian, 94474 Vilshofen (DE)
(86) Internationale Anmeldenummer: PCT/EP2013/056005
(87) Internationale Veröffentlichungsnummer: WO 2013/143978

(56) Entgegenhaltungen:
- EP-A1- 0 648 952
- EP-B1- 1 627 160
- WO-A2-2009/074222
- DE-A1- 4 212 389

## Beschreibung

Die vorliegende Erfindung betrifft eine Scheibenbremse nach dem Oberbegriff des Anspruches 1, wie z.B. aus WO-A-2009/074222 bekannt. Die DE 42 12 389 A1 offenbart eine Scheibenbremse, bei der an einer Traverse zwei Druckstücke verstellbar gelagert sind. Die Druckstücke halten eine Bremsbacke mit einem Bremsbelag, der für einen Bremsvorgang an die Scheibenbremse gedrückt wird. Um das Lüftspiel bei einem Verschleiß des Bremsbelages einzustellen, wird jedes Druckstück an einer Stellspindel gehalten, wobei zur Abdichtung zwischen dem Druckstück und dem Bremssattel eine erste elastische Dichtung vorgesehen ist. Da diese Dichtung beschädigt werden kann, ist zwischen der Traverse und dem Bremssattel eine zweite Dichtung vorgesehen.

In einer Weiterentwicklung ist in der EP 1 627 160 eine Scheibenbremse offenbart, bei der ein Druckstück über eine drehbare Stellspindel bewegbar ist. Dabei ist eine erste Dichtung zwischen dem Druckstück und einer Verschlussplatte des Bremssattels vorgesehen, während eine zweite Dichtung zwischen der Verschlussplatte und der Traverse angeordnet ist. Gerade im Bereich der drehbaren Verstellelemente ist eine zuverlässige Abdichtung wünschenswert.

Es ist daher Aufgabe der vorliegenden Erfindung, eine Scheibenbremse zu schaffen, bei der auch im Bereich einer drehbaren Gewindehülse der Nachstellvorrichtung eine zuverlässige Abdichtung erhalten wird.

Diese Aufgabe wird mit einer Scheibenbremse mit den Merkmalen des Anspruches 1 gelöst. Zwischen dem Druckstück und einem umgebenden Gehäuse sind eine Primärdichtung und eine Sekundärdichtung vorgesehen, wobei die Sekundärdichtung einen sich mit der Gewindehülse der Nachstellvorrichtung drehenden Gewindedichtring und eine nicht drehende Dichtmembran aufweist. Dadurch kann zum Einstellen des Lüftspiels die Nachstellvorrichtung eine Gewindehülse einsetzen, bei der die Abdichtung in vorteilhafter Weise durch den Gewindedichtring im Bereich des Gewindes erfolgt und zusätzlich eine Dichtmembran vorgesehen ist, die den Innenraum der Scheibenbremse abdichtet. Erfindungsgemäß liegt die Dichtmembran klemmend an dem Gewindedichtring an. Dabei kann zwischen dem Gewindedichtring und der Dichtmembran mindestens eine komprimierbare Dichtlippe vorgesehen sein, so dass auch durch eine Drehung des Gewindedichtringes relativ zu der Dichtmembran eine Abdichtung gewährleistet wird.

Für eine stabile Festlegung der Dichtmembran kann diese in axiale Richtung der Gewindehülse an der Gewindehülse gesichert sein.

Für eine Abdichtung des Gewindes einer mit dem Druckstück verbundenen Stange ist der Gewindedichtring vorzugsweise klemmend in einer Aufnahme der Gewindehülse benachbart zu einem Innengewinde festgelegt. Dadurch kann der Gewindedichtring mit einer gewissen Vorspannung gegen das Gewinde an der Stange anliegen.

Die Dichtmembran weist vorzugsweise ein drehbar auf der Gewindehülse fixiertes Trägerelement und ein flexibles, am Gehäuse anliegendes Membranelement auf. Das Trägerelement kann dabei aus einem härteren Werkstoff, beispielsweise Metall oder Kunststoff, bestehen und über Befestigungsmittel relativ zu der Gewindehülse drehbar an dieser axial gesichert gehalten sein. Als Befestigungsmittel kann beispielsweise ein Federring eingesetzt werden, der zumindest teilweise in eine in der Gewindehülse ausgebildete Nut eingreift, so dass die Dichtmembran einfach zu montieren ist.

Die Erfindung wird nachfolgend anhand eines Ausführungsbeispiels mit Bezug auf die beigefügten Zeichnungen näher erläutert. Es zeigen:
- Figur 1: eine geschnittene Ansicht der Scheibenbremse im Bereich eines Druckstückes;
- Figur 2: eine geschnittene Ansicht des Bereiches der Abdichtung des Druckstückes der Figur 1;
- Figuren 3A und 3B: Ansichten eines Endabschnittes der Gewindehülse und des Federringes zur Festlegung der Dichtmembran;
- Figur 4: eine Ansicht des Gewindedichtringes, und
- Figur 5: eine Ansicht der Dichtmembran.

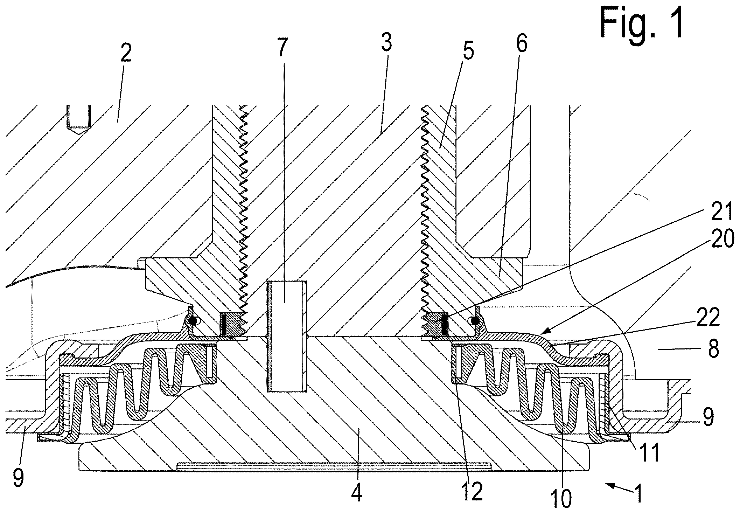

Eine Scheibenbremse 1 umfasst eine über eine Zuspanneinrichtung bewegbare Traverse 2, an der ein oder mehrere Druckstücke 4 verstellbar gehalten sind, wobei über die Druckstücke 4 ein Bremsbelag gegen eine Bremsscheibe gedrückt werden kann. In Figur 1 ist lediglich der Bereich eines solchen Druckstückes 4 dargestellt, der gegenüber einem Bremssattel 8 abgedichtet werden soll.

Zum Einstellen des Lüftspiels ist eine Nachstellvorrichtung mit einer drehbaren Gewindehülse 5 vorgesehen, die ein Innengewinde aufweist und einen radial nach außen hervorstehenden Flansch 6 besitzt. Der Flansch 6 ist gegen die Traverse 2 abgestützt.

In der Gewindehülse 5 befindet sich eine Stange 3 mit einem Außengewinde, die über ein Verbindungselement 7 mit dem Druckstück 4 verbunden ist. Durch Drehen der Gewindehülse 5 kann somit die Position des Druckstückes 4 in axiale Richtung der Gewindehülse 5 verändert werden.

An dem Bremssattel 8 ist ein Bodenblech 9 fixiert, das eine Anlagefläche für eine Primärdichtung 10 und eine Sekundärdichtung 20 ausbildet. Die Primärdichtung 10 ist dabei als Faltenbalg ausgebildet, der mit einem Ende 11 an einer inneren Umfangsfläche des Bodenbleches 9 klemmend anliegt. An der gegenüberliegenden Seite ist die Primärdichtung 10 mit einem Ende 12 an einer äußeren Umfangsfläche des Druckstückes 4 klemmend fixiert. Die Primärdichtung 10 bewegt sich daher zusammen mit dem Druckstück 4, das bei einem Nachstellvorgang in Richtung der Bremsscheibe bewegt wird. Um eine Abdichtung auch dann zu gewährleisten, wenn die Primärdichtung 10 beschädigt ist, befindet sich die Sekundärdichtung 20 auf der zur Bremsscheibe abgewandten Seite der Primärdichtung 10.

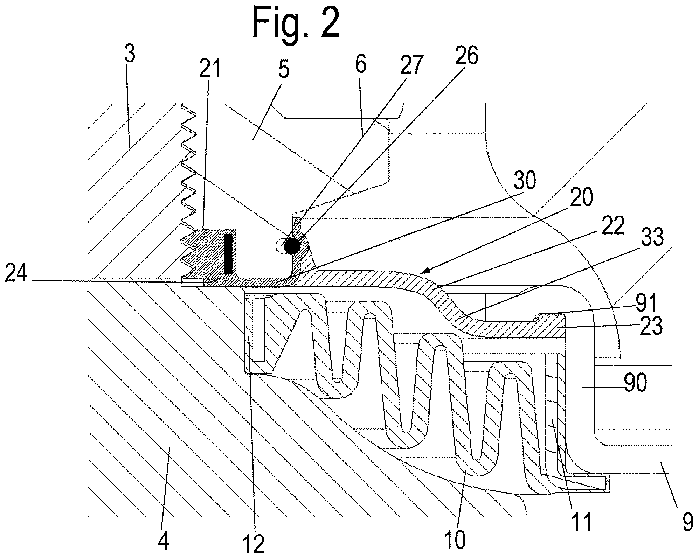

Wie auch in Figur 2 gezeigt ist, umfasst die Sekundärdichtung 20 einen Gewindedichtring 21 sowie eine Dichtmembran 22. Der Gewindedichtring 21 ist an einer stirnseitigen Aufnahme der Gewindehülse 5 klemmend festgelegt und liegt mit einer inneren Umfangsfläche an dem Außengewinde der Stange 3 an. Der Gewindedichtring 21 besitzt dabei auf der zum Druckstück 4 gewandten Seite eine Dichtlippe 24, die klemmend an einem Trägerelement 30 der Dichtmembran 22 anliegt. Dadurch wird auch eine Abdichtung zwischen dem sich drehenden Gewindedichtring 21 und dem nicht drehenden Trägerelement 30 erreicht.

Das Trägerelement 30 ist an der Gewindehülse 5 axial gesichert, aber relativ zur Gewindehülse 5 drehbar gehalten. Hierfür ist das Trägerelement 30 im Wesentlichen winkelförmig ausgebildet und umfasst an einem axial verlaufenden Abschnitt eine Aufnahme für einen Federring 26, der zumindest teilweise in eine Nut 27 am äußeren Umfang der Gewindehülse 5 eingreift. Die Dichtmembran 22 umfasst ferner ein an dem Trägerelement 30 festgelegtes elastisches Membranelement 33, das ringförmig ausgebildet ist und einen verdickten Endabschnitt 23 aufweist. Der verdickte Endabschnitt 23 ist in einer Aufnahme 91 an dem Bodenblech 9 gehalten.

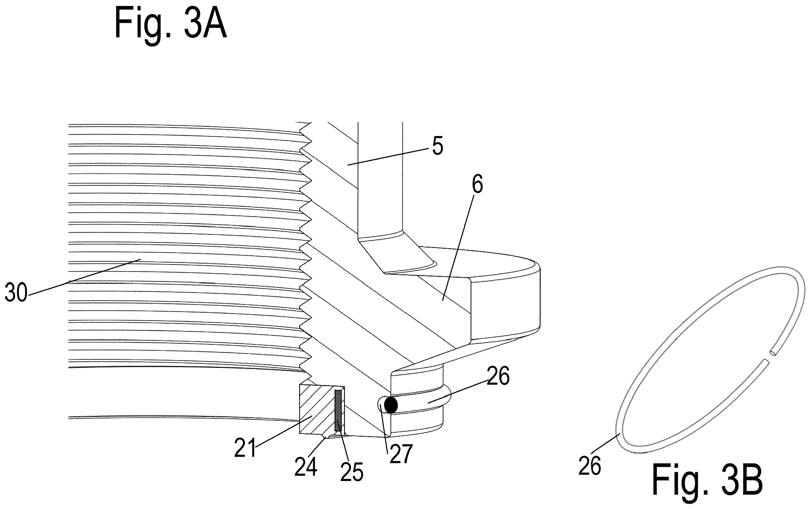

In Figur 3A ist der Endbereich der Gewindehülse 5 ohne die Dichtmembran 22 dargestellt. Der Gewindedichtring 21 ist in einer Aufnahme an der Gewindehülse 5 klemmend festgelegt und umfasst einen inneren Metallring 25, der von einem Elastomer umgeben ist. Der Metallring 25 ist dabei benachbart zu einer inneren Umfangswand der Gewindehülse 5 angeordnet. In axiale Richtung steht eine Dichtlippe 24 hervor, die gegen eine Anlagefläche des Trägerelementes 30 gedrückt wird. An der Gewindehülse 5 ist ferner an einem äußeren Umfang eine umlaufende Nut 27 vorgesehen, in die ein Federring 26 einfügbar ist. Der Federring 26 kann dabei für die Montage radial in Richtung der Nut 27 eingedrückt werden und weitet sich anschließend wieder auf, um das Trägerelement 30 in axiale Richtung der Gewindehülse 5 festzulegen. Der geschlitzt ausgebildete Federring 26 ist in Figur 3B dargestellt.

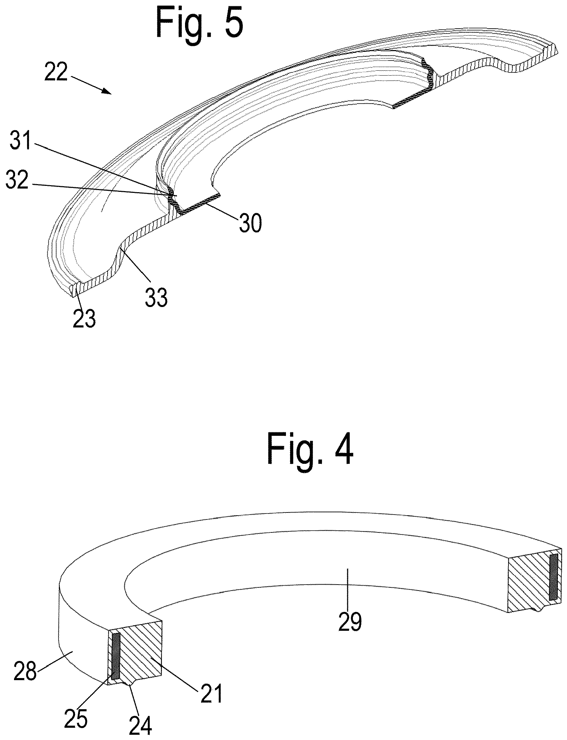

In Figur 4 ist der Gewindedichtring 21 im Detail gezeigt. Der Gewindedichtring 21 umfasst eine äußere glatte Umfangsfläche 28, die klemmend in der Gewindehülse 5 festgelegt ist. Benachbart zu der äußeren Umfangsfläche 28 ist ein innerer Metallring 25 angeordnet. Ferner besitzt der Gewindedichtring 21 eine innere glatte Umfangsfläche 29, die in die Gewindegänge der Stange 3 gedrückt wird.

In Figur 5 ist die Dichtmembran 22 gezeigt, die ein inneres Trägerelement 30 aus einem härteren Werkstoff, beispielsweise Metall oder Kunststoff, aufweist, das im Querschnitt winkelförmig ausgebildet ist. An einem in axiale Richtung der Gewindehülse 5 hervorstehenden Wandabschnitt 31 ist eine muldenförmige Aufnahme 32 für den Federring 26 ausgebildet. Dadurch kann die Dichtmembran 22 auf die Gewindehülse 5 mit dem Federring 26 aufgesteckt und dort verrastet werden. Der nach innen hervorstehende Abschnitt des Trägerelementes 30 liegt dann an der Dichtlippe 24 des Gewindedichtringes 21 an und sichert den Gewindedichtring 21 in axiale Richtung an der Gewindehülse 5.

An dem Trägerelement 30 ist ein elastisches Membranelement 33 fixiert, beispielsweise angespritzt, das am äußeren Umfang einen verdickten Endabschnitt 23 aufweist, der an dem Bodenblech 9 fixiert wird.

In dem dargestellten Ausführungsbeispiel liegen die Primärdichtung und die Sekundärdichtung 20 am äußeren Umfang an dem Bodenblech 9 an. Es ist natürlich auch möglich, dass die Primärdichtung 10 und die Sekundärdichtung 20 an einem anderen Bauteil als dem Bodenblech 9 fixiert werden, beispielsweise direkt am Bremssattel 8.

Bei dem dargestellten Ausführungsbeispiel ist an dem Gewindedichtring 21 eine Dichtlippe 24 angeformt. Es wäre natürlich auch möglich, eine entsprechende Dichtlippe an der Dichtmembran 22 vorzusehen, um eine Abdichtung zu gewährleisten.

### Bezugszeichenliste

- 1: Scheibenbremse
- 2: Traverse
- 3: Stange
- 4: Druckstück
- 5: Gewindehülse
- 6: Flansch
- 7: Verbindungselement
- 8: Bremssattel
- 9: Bodenblech
- 10: Primärdichtung
- 11: Ende
- 12: Ende
- 20: Sekundärdichtung
- 21: Gewindedichtring
- 22: Dichtmembran
- 23: Endabschnitt
- 24: Dichtlippe
- 25: Metallring
- 26: Federring
- 27: Nut
- 28: Umfangsfläche
- 29: Umfangsfläche
- 30: Trägerelement
- 31: Wandabschnitt
- 32: Aufnahme
- 33: Membranelement
- 91: Aufnahme

## Patentansprüche

1. Scheibenbremse, insbesondere für Nutzfahrzeuge, mit:
a) einem eine Bremsscheibe übergreifenden Bremssattel;
b) mindestens einer Zuspanneinrichtung zum Zuspannen der Scheibenbremse mittels einer verschiebbar geführten Traverse (2);
c) und einem über eine Nachstellvorrichtung gehaltenes Druckstück (4), mit dem ein Bremsbelag gegen die Bremsscheibe drückbar ist;
d) wobei das Druckstück (4) über eine drehbare Gewindehülse (5) der Nachstellvorrichtung bewegbar ist;
e) und zwischen dem Druckstück (4) und einem umgebenden Bauteil (9) eine Primärdichtung (10) und eine Sekundärdichtung (20) vorgesehen sind,
**wobei**
f) dass die Sekundärdichtung (20) einen sich mit der Gewindehülse (5) drehenden Gewindedichtring (21) und eine nicht drehende Dichtmembran (22) aufweist,
**dadurch gekennzeichnet, dass**
g) die Dichtmembran (22) klemmend an dem Gewindedichtring (21) anliegt

2. Scheibenbremse nach Anspruch 1, **dadurch gekennzeichnet, dass** zwischen dem Gewindedichtring (21) und der Dichtmembran (22) mindestens eine komprimierbare Dichtlippe (24) vorgesehen ist.

3. Scheibenbremse nach einem der vorhergehenden Ansprüche, **dadurch gekennzeichnet, dass** die Dichtmembran (22) in axiale Richtung der Gewindehülse (5) an der Gewindehülse (5) gesichert ist.

4. Scheibenbremse nach einem der vorhergehenden Ansprüche, **dadurch gekennzeichnet, dass** die Gewindehülse (5) benachbart zu einem Innengewinde (30) eine Aufnahme aufweist, in die der Gewindedichtring (21) klemmend festgelegt ist.

5. Scheibenbremse nach einem der vorhergehenden Ansprüche, **dadurch gekennzeichnet, dass** die Dichtmembran (22) aus einem drehbar auf der Gewindehülse (5) fixierten Trägerelement (30) und einem flexiblen, am Gehäuse (9) anliegenden Membranelement (33) gebildet ist.

6. Scheibenbremse nach einem der vorhergehenden Ansprüche, **dadurch gekennzeichnet, dass** ein Trägerelement (30) der Dichtmembran (22) über ein Befestigungsmittel (26) relativ zu der Gewindehülse (5) drehbar aber axial gesichert gehalten ist.

7. Scheibenbremse nach Anspruch 6, **dadurch gekennzeichnet, dass** das Befestigungsmittel durch einen Federring (26) gebildet ist, der zumindest teilweise in eine an der Gewindehülse (5) ausgebildete Nut (27) eingreift.

8. Scheibenbremse nach einem der vorhergehenden Ansprüche, **dadurch gekennzeichnet, dass** der Gewindedichtring (21) als mit einem Elastomer umgebender Metallring (25) ausgebildet ist.

## Claims

1. A disc brake, in particular for utility vehicles, comprising:
a) a brake caliper that sits over a brake disc;
b) at least one brake application device for applying the disc brake by means of a slidably guided cross member (2);
c) and a pressure piece (4) that is held by an adjustment device and by which a brake lining can be pressed against the brake disc;
d) whereby the pressure piece (4) can be moved by a rotatable threaded bushing (5) of the adjustment device;
e) and a primary seal (10) and a secondary seal (20) are provided between the pressure piece (4) and a surrounding component (9),
**whereby**
f) the secondary seal (20) comprises a threaded sealing ring (21) that rotates with the threaded sleeve (5), and a non-rotating sealing diaphragm (22),
**characterised in that**
g) the sealing diaphragm (22) clamps against the threaded sealing ring (21).

2. A disk brake according to claim 1, **characterised in that** at least one compressible sealing lip (24) is provided between the threaded sealing ring (21) and the sealing diaphragm (22).

3. A disk brake according to one of the preceding claims, **characterised in that** the sealing diaphragm (22) is secured on the threaded bushing (5) axially along the threaded bushing (5).

4. A disc brake according to one of the preceding claims, **characterised in that** adjacent to an internal thread (30) the threaded bushing (5) has a recess into which the threaded sealing ring (21) is fixed by clamping.

5. A disc brake according to one of the preceding claims, **characterised in that** the sealing diaphragm (22) is formed of a support element (30) fixed to the threaded bushing (5) such that it can rotate and a flexible diaphragm element (33) adjacent to the housing (9).

6. A disc brake according to one of the preceding claims, **characterised in that** a support element (30) of the sealing diaphragm (22) is held by a fastening means (26) such that it can rotate in relation to the threaded bushing (5) but is secured axially.

7. A disc brake according to claim 6, **characterised in that** the fastening means takes the form of a spring ring (26) that engages at least partially in a groove (27) formed on the threaded bushing (5).

8. A disc brake according to one of the preceding claims, **characterised in that** the threaded sealing ring (21) is designed as a metal ring surrounding an elastomer.

## Revendications

1. Frein à disque, notamment pour des véhicules utilitaires, comprenant :
a) un étrier de frein enjambant un disque de frein;
b) au moins un dispositif de serrage pour serrer le frein à disque au moyen d'une traverse (2) guidée à coulissement;
c) et une pièce (4) d'application d'une pression, qui est maintenue sur le dispositif de rattrapage et par laquelle une garniture de frein peut être poussée sur le disque de frein;
d) dans lequel la pièce (4) d'application d'une pression peut être déplacée par une douille (5) filetée tournante du dispositif de rattrapage;
e) et il est prévu une étanchéité (10 primaire et une étanchéité (20) secondaire entre la pièce (4) d'application d'une pression et un élément (9) constitutif qui l'entoure,
dans lequel
f) l'étanchéité (20) secondaire a une bague (21) d'étanchéité filetée tournant avec la douille (5) filetée et une membrane (22) d'étanchéité qui ne tourne pas,
**caractérisé en ce que**
g) la membrane (22) d'étanchéité s'applique à serrage sur la bague (21) d'étanchéité filetée.

2. Frein à disque suivant la revendication 1, **caractérisé en ce qu'**au moins une lèvre (24) d'étanchéité, pouvant être comprimée, est prévue entre la bague (21) d'étanchéité filetée et la membrane (22) d'étanchéité.

3. Frein à disque suivant l'une des revendications précédentes, **caractérisé en ce que** la membrane (22) d'étanchéité est bloquée sur la douille (5) filetée dans la direction axiale de la douille (5) filetée.

4. Frein à disque suivant l'une des revendications précédentes, **caractérisé en ce que** la douille (5) filetée a, au voisinage d'un taraudage (30), un logement, qui est fixé à serrage dans la bague (21) d'étanchéité filetée.

5. Frein à disque suivant l'une des revendications précédentes, **caractérisé en ce que** la membrane (22) d'étanchéité est formée d'un élément (30) de support immobilisé, avec possibilité de tourner, sur la douille (5) fileté et d'un élément (33) de membrane souple s'appliquant à l'enveloppe (9).

6. Frein à disque suivant l'une des revendications précédentes, **caractérisé en ce que** l'élément (30) de support de la membrane (22) d'étanchéité est, par un moyen (26) de fixation, maintenu, avec possibilité de tourner par rapport à la douille (5) filetée, mais en étant bloqué axialement.

7. Frein à disque suivant la revendication 6, **caractérisé en ce que** le moyen de fixation est formé d'un jonc (26) élastique, qui pénètre, au moins en partie, dans une rainure (27) formée sur la douille (5) filetée.

8. Frein à disque suivant l'une des revendications précédentes, **caractérisé en ce que** la bague (21) d'étanchéité filetée est constituée sous la forme d'une bague (25) métallique entourant un élastomère.
